# EUROPEAN PATENT APPLICATION

(11) **EP 4 663 691 A1**
(43) Date of publication of application: **17.12.2025**
(21) Application number: 24182287.3
(22) Date of filing: 14.06.2024
(51) Int. Cl.: C08J 9/00

(54) **COMPOSITION, METHOD FOR THE MANUFACTURE THEREOF, AND ARTICLES COMPRISING THE COMPOSITION**

(71) Applicant: SHPP Global Technologies B.V., 4612 PX Bergen op Zoom (NL)
(72) Inventor: HOU, Jingqiang, Shanghai, China (CN); MAO, Rui, Shanghai, China (CN); LIU, Chao, Shanghai, China (CN); ZHENG, Liping, Shanghai, China (CN)
(74) Representative: Balder IP Law, S.L.

(57) **Abstract**

A composition includes particular amounts of a polyphenylene ether, a polystyrene, an impact modifier, and a halogenated flame retardant. The composition, after foaming with a blowing agent, has a density of less than 0.5 g/cm³. Methods of making the compositions and articles including the composition are also described.

## Description

### BACKGROUND

This disclosure relates to compositions and methods for the manufacture thereof. In particular, this disclosure relates to foamable compositions and foamed compositions formed from the foamable compositions.

Polyphenylene ether resins are known as high performance engineering thermoplastics possessing high melt viscosities and softening points which makes them useful for many applications where resistance to high temperatures is desired, and it is well known that properties of the polyphenylene ether resins can be altered materially by blending with other resin materials.

Foamed articles are of interest for a variety of applications. For example, light weight, high strength, and flame retardant materials are particularly desirable for use in the electric vehicle industry. Existing foamed compositions, for example based on polyolefins, polystyrene, or other thermoplastics, fail to provide the desired level of flame retardancy and heat resistance, thus limiting the utility of these materials in certain applications.

It would be desirable to provide a foamed composition exhibiting a particular combination of properties. Providing a low density, flame retardant foamed article would be especially advantageous.

### SUMMARY

An aspect of the disclosure is a composition comprising: 12 to 85 weight percent of a polyphenylene ether; 12 to 85 weight percent of a homopolystyrene, optionally in combination with a high impact polystyrene; 0.1 to 15 weight percent of a block copolymer of an alkenyl aromatic and a conjugated diene; and 1 to 30 weight percent of a halogenated flame retardant; wherein weight percent of each component is based on the total weight of the composition; and wherein the composition, after foaming with a blowing agent, has a density of less than 0.5 g/cm³.

Another aspect of the disclose is a method of making a composition, the method comprising: melt mixing in an extruder 12 to 85 weight percent of a polyphenylene ether; 12 to 85 weight percent of a homopolystyrene, optionally in combination with a high impact polystyrene; 0.1 to 15 weight percent of a block copolymer of an alkenyl aromatic and a conjugated diene; and 1 to 30 weight percent of a flame retardant; to provide a first mixture, wherein weight percent of each component is based on the total weight of the first mixture; introducing a blowing agent into the extruder; mixing the blowing agent and the first mixture in the extruder to provide a second mixture; cooling the second mixture, optionally in a second extruder; and foaming the second mixture through a die to provide the composition having a density of less than 0.5 g/cm³.

Another aspect of the disclosure is an article comprising the composition.

The above described and other features are exemplified by the following detailed description.

### DETAILED DESCRIPTION

Polyphenylene ether is a foamable thermoplastic material. Previous methods of producing polyphenylene ether foams use foaming of beads of polyphenylene ether. Materials produced by such a method generally exhibit low strength, low production efficiency, and high cost. Extrusion foaming processes can improve production efficiency of preparing foamed materials, however particular compositions and process parameters must be selected to provide the desired foamed material. Accordingly, there remains a continuing need in the art for improved methods of producing polyphenylene ether foams that are light weight, heat resistant, and flame retardant. It would be a further advantage to provide the polyphenylene ether foamed compositions using an extrusion foaming process.

The present inventors have advantageously discovered particular compositions and processes that can address the above-described technical limitations to provide improved polyphenylene ether foamed compositions. In particular, a composition (i.e., a foamable composition) includes particular amounts of a polyphenylene ether, a polystyrene, a block copolymer of an alkenyl aromatic and a conjugated diene, and a halogenated flame retardant. The foamed composition can be prepared using an extrusion foaming process in the presence of a blowing agent. A significant improvement is therefore provided by the present disclosure.

Accordingly, a composition represents an aspect of the present disclosure. The composition comprises a polyphenylene ether. The polyphenylene ether comprises phenylene ether units having the structure 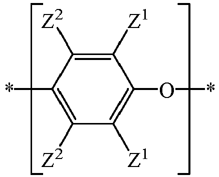 wherein each occurrence of Z¹ is independently halogen, unsubstituted or substituted C₁₋₁₂ hydrocarbyl, provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and each occurrence of Z² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms. The polyphenylene ether can have aminoalkyl-containing end group(s), typically located in a position ortho to the hydroxy group. As one example, Z¹ can be a di-n-butylaminomethyl group formed by reaction of a terminal 3,5-dimethyl-1,4-phenyl group with the di-n-butylamine component of an oxidative polymerization catalyst. Also frequently present are tetramethyldiphenoquinone (TMDQ) end groups, typically obtained from 2,6-dimethylphenol-containing reaction mixtures in which tetramethyldiphenoquinone by-product is present. The polyphenylene ether can be in the form of a homopolymer, a random copolymer, a graft copolymer, or a block copolymer, as well as a combination thereof. In an aspect, the polyphenylene ether is a homopolymer, preferably poly(2,6-dimethyl-1,4-phenylene ether).

The polyphenylene ether can have an intrinsic viscosity of 0.1 to 1 deciliter per gram measured by Ubbelohde viscometer at 25°C in chloroform. Within this range, the polyphenylene ether intrinsic viscosity can be 0.1 to 0.8 deciliter per gram, or 0.2 to 0.6 deciliter per gram, or 0.3 to 0.5 deciliter per gram, or 0.4 to 0.5 deciliter per gram.

In a specific aspect, the polyphenylene ether is a poly(2,6-dimethyl-1,4-phenylene ether) having an intrinsic viscosity of 0.1 to 1 deciliter per gram, measured by Ubbelohde viscometer at 25°C in chloroform. Within this range, the polyphenylene ether can have an intrinsic viscosity of 0.1 to 0.8 deciliters per gram, or 0.2 to 0.6 deciliter per gram, or 0.3 to 0.5 deciliter per gram, or 0.4 to 0.5 deciliter per gram.

The polyphenylene ether and the raw materials used to produce the polyphenylene ether may be, or may be formed from, renewable, sustainable, bio-circular, circular, lower carbon footprint feedstocks, upcycled, and/or post-consumer/post-industrial recycled materials, including pyrolysis oil ("py-oil") .

Polyphenylene ethers made from renewable sources may include, for example, a bio-content or PCR content of up to about 99.9%, about 1 to 99%, 5 to 95%, 55 to 99%, or 80 to 99%, 1 to 50%, 1 to 25%, 1 to 15%, 1 to 10%, or 1 to 5%, based, e.g., on the monomer source. The polyphenylene ether can be, e.g., an oligomer with as few as two repeating units to ultrahigh molecular weight polyphenylene ether. The weight average molecular weight of the polyphenylene ether in one non-limiting embodiment may range from 600 to 200,000 grams per mole, as determined by gel permeation chromatography. In another non-limiting embodiment, the polyphenylene ether may have an intrinsic viscosity of up to 1.5 deciliters per gram (dl/g) as measured at 25°C in chloroform. Polyphenylene ether made from renewable sources may include material made by a mass balance approach and certified by regulatory bodies such as, for example, the ISCC Plus.

Polyphenylene ether in an aspect may be prepared by oxidative polymerization of monomers in the presence of a polymerization catalyst in the presence of oxygen. Any of the components used in the polymerization reaction or their synthetic precursors, or the solvents used in the process, may be bio-sourced, bio-circular, or renewable raw materials. Such components and precursors include monomers (e.g., monohydric phenol, dihydric phenol and other comonomers), reagents, solvents, catalysts (e.g., a metal source, a secondary alkylene diamine ligand, a tertiary monoamine, and optionally a secondary monoamine or alternatively enzyme catalysts), gases (e.g., oxygen gas), or any combinations thereof. In some aspects, reaction components used in the polymerization of polyphenylene ethers may be from sources as listed in the EU Renewable Energy Directive Annex IX.

Polyphenylene ether can be further processed, such as by redistribution, or any chemical derivatization, such as post-polymerization end-group capping or coupling, to make other materials that can transfer the sustainability characteristic to the new material. Such reagents and/or their synthetic precursors may be sustainable, bio-sourced, bio-circular, or renewable raw materials, upcycled, and/or post-consumer/ post-industrial recycled materials, including pyrolysis oil ("py-oil"), to produce a polyphenylene ether.

Biosourced and sustainable materials may be derived from biomass sources or industrial sources such as waste (e.g., municipal waste). Biomass is a renewable organic material that comes from organic matter. Lignocellulosic biomass, the most abundant type of biomass and includes a wide variety of different biomass types including grasses, wood, energy crops, and agricultural and municipal wastes, is mostly composed of cellulose, hemicellulose, and lignin. Depolymerization of lignin, which is a phenolic polymer, can provide phenol. Solvents used in the production of monomers, such as methanol and acetone can be obtained from syngas, which is a product of the gasification of biomass.

Polyphenylene ether, such as a recycled polyphenylene ether comprising an open- or closed-loop post-consumer recycled ("PCR") polyphenylene ether, an open- or closed-loop post-industrial recycled ("PIR") polyphenylene ether, or upcycled polyphenylene ether or a combination thereof may be used, provided that the desired property or combination of properties may be achieved. As used herein, the term "post-consumer recycle polyphenylene ether" refers to a polyphenylene ether that has reached the intended user or consumer and which has been collected or reclaimed after utilization by the end-user or consumer. Thus, for example, it is understood that that the term refers to a polyphenylene ether material in whole or in part that would have otherwise been disposed of as waste, but has instead been collected and recovered (reclaimed) as a material input, in lieu of a virgin material, for a recycling or manufacturing process. PCR-polyphenylene ether is inclusive of material that has been reprocessed from collected or reclaimed material by means of a manufacturing process, (including e.g., purification, sorting, and pretreating) and made into a product or into a component for incorporation into a product. Such recycled polyphenylene ethers can be further processed, for example, into the form of powders, ground materials, flakes, pellets or other form. As used herein, the term "post-industrial recycled polyphenylene ether" refers to a polyphenylene ether polymer or polymers that have never reached the end user and that is production waste arising during polymerization reactions, during further processing, or during manufacturing the resin or an article and includes materials such as, but not limited to, sprues from injection molding, start-up material from injection molding or extrusion, extrusion scrap, molding scrap, edge trims from extruded sheets or films, and the like, including materials diverted from the waste stream during a manufacturing process for an article.

In an aspect, the polyphenylene ether is a homopolymer. For example, the polyphenylene ether can be a homopolymer consisting of repeating units derived from of 2,6-dimethylphenol. In an aspect, a polyphenylene ether other than a homopolymer of phenylene ether can be excluded from the composition.

The polyphenylene ether is present in the composition in an amount of 12 to 85 weight percent, based on the total weight of the composition. Within this range, the polyphenylene ether can be present in an amount of 20 to 80 weight percent, or 25 to 75 weight percent, or 30 to 75 weight percent, or 35 to 75 weight percent, each based on the total weight of the composition.

In addition to the polyphenylene ether, the composition further comprises a homopolystyrene (also referred to as "polystyrene homopolymer"). Homopolystyrene comprises repeating units derived from styrene. As used herein, the term "homopolystyrene" refers to a homopolymer of styrene and can also be referred to as crystal polystyrene. Thus, the residue of any monomer other than styrene is excluded from the homopolystyrene. The homopolystyrene can be atactic, syndiotactic, or isotactic. In an aspect, the homopolystyrene is atactic.

The homopolystyrene can have a melt volume flow rate of 1 to 35 grams per 10 minutes, or 1.5 to 30 grams per 10 minutes, or 1.5 to 20 grams per 10 minutes, or 1.5 to 10 grams per 10 minutes, or 1.5 to 5 grams per 10 minutes, each measured at 200°C and 5 kilogram load according to ISO 1133. In an aspect, the homopolystyrene can have a melt volume flow rate of 1 to 5 grams per 10 minutes, measured at 200°C and 5 kilogram load according to ISO 1133. The homopolystyrene can have a weight average molecular weight of 50,000 to 450,000 grams per mole, determined using gel permeation chromatography.

The homopolystyrene is present in the composition in an amount of 12 to 85 weight percent, based on the total weight of the composition. Within this range, the homopolystyrene can be present in an amount of 15 to 85 weight percent, or 15 to 75 weight percent, or 15 to 70 weight percent, or 20 to 65 weight percent.

In an aspect, the homopolystyrene can optionally be used in combination with a high impact polystyrene. When present, the high impact polystyrene can be present in an amount of up to 90 weight percent, or up to 80 weight percent, or up to 70 weight percent, or up to 60 weight percent, or up to 50 weight percent, or up to 40 weight percent, or up to 30 weight percent, or up to 25 weight percent, or up to 20 weight percent, or up to 15 weight percent, or up to 10 weight percent, or up to 5 weight percent, each based on the total weight of the homopolystyrene and the high impact polystyrene. In an aspect, when present, the high impact polystyrene can be present in an amount of 5 to 15 weight percent. In some aspect, the composition can be devoid of a high impact polystyrene.

The composition further comprises a block copolymer of an alkenyl aromatic compound and a conjugated diene. For brevity, this component is referred to as the "block copolymer". The block copolymer can comprise 10 to 90 weight percent of poly(alkenyl aromatic) content and 90 to 10 weight percent of hydrogenated poly(conjugated diene) content, based on the weight of the block copolymer. In an aspect, the block copolymer is a low poly(alkenyl aromatic content) block copolymer in which the poly(alkenyl aromatic) content is 10 to less than 40 weight percent, specifically 20 to 35 weight percent, more specifically 25 to 35 weight percent, yet more specifically 30 to 35 weight percent, all based on the weight of the low poly(alkenyl aromatic) content block copolymer. In an aspect, the block copolymer is a high poly(alkenyl aromatic content) block copolymer in which the poly(alkenyl aromatic) content is 40 to 90 weight percent, specifically 50 to 80 weight percent, more specifically 60 to 70 weight percent, all based on the weight of the high poly(alkenyl aromatic content) block copolymer.

The block copolymer can have a weight average molecular weight of 40,000 to 400,000 grams per mole (g/mol). The number average molecular weight and the weight average molecular weight can be determined by gel permeation chromatography and based on comparison to polystyrene standards. In an aspect, the block copolymer has a weight average molecular weight of 200,000 to 400,000 g/mol, specifically 220,000 to 350,000 g/mol. In an aspect the block copolymer has a weight average molecular weight of 40,000 to 200,000 g/mol, specifically 40,000 to 180,000 g/mol, more specifically 40,000 to 150,000 g/mol.

The alkenyl aromatic monomer used to prepare the block copolymer can have the structure 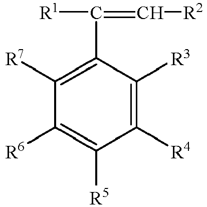 wherein R¹ and R² each independently represent a hydrogen atom, a C₁-₈ alkyl group, or a C₂-₈ alkenyl group; R³ and R⁷ each independently represent a hydrogen atom, a C₁-₈ alkyl group, a chlorine atom, or a bromine atom; and R⁴, R⁵, and R⁶ each independently represent a hydrogen atom, a C₁-₈ alkyl group, or a C₂-₈ alkenyl group, or R⁴ and R⁵ are taken together with the central aromatic ring to form a naphthyl group, or R⁵ and R⁶ are taken together with the central aromatic ring to form a naphthyl group. Specific alkenyl aromatic monomers include, for example, styrene, chlorostyrenes such as p-chlorostyrene, methylstyrenes such as alpha-methylstyrene and p-methylstyrene, and t-butylstyrenes such as 3-t-butylstyrene and 4-t-butylstyrene. In an aspect, the alkenyl aromatic monomer is styrene.

The conjugated diene used to prepare the block copolymer can be a C₄-₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In an aspect, the conjugated diene is 1,3-butadiene, 2-methyl-1,3-butadiene, or a combination thereof. In an aspect, the conjugated diene is 1,3-butadiene.

The block copolymer is a copolymer comprising (A) at least one block derived from an alkenyl aromatic compound and (B) at least one block derived from a conjugated diene. The block copolymer can be unhydrogenated or at least partially hydrogenated (referred to as a hydrogenated block copolymer). In the block copolymer is a hydrogenated block copolymer, the aliphatic unsaturated group content in the block (B) is at least partially reduced by hydrogenation. In an aspect, the aliphatic unsaturation in the (B) block is reduced by at least 50 percent, specifically at least 70 percent. In an aspect, the block copolymer is an unhydrogenated block copolymer, wherein the aliphatic unsaturated group content has not been reduced by hydrogenation.

The arrangement of blocks (A) and (B) includes a linear structure, a grafted structure, and a radial teleblock structure with or without a branched chain. Linear block copolymers include tapered linear structures and non-tapered linear structures. In an aspect, the block copolymer has a tapered linear structure. In an aspect, the block copolymer has a non-tapered linear structure. In an aspect, the block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In an aspect, the block copolymer is a diblock copolymer, a triblock copolymer, or a combination thereof.

In an aspect, the block copolymer excludes the residue of monomers other than the alkenyl aromatic compound and the conjugated diene. In an aspect, the block copolymer consists of blocks derived from the alkenyl aromatic compound and the conjugated diene. It does not comprise grafts formed from these or any other monomers. It also consists of carbon and hydrogen atoms and therefore excludes heteroatoms. In an aspect, the block copolymer includes the residue of one or more acid functionalizing agents, such as maleic anhydride. In an aspect, the block copolymer is a hydrogenated block copolymer and comprises a polystyrene-poly(ethylene-butylene)-polystyrene triblock copolymer. In an aspect, the block copolymer is an unhydrogenated block copolymer and comprises a polystyrene-polybutadiene-polystyrene triblock copolymer.

Methods for preparing block copolymers are known in the art and many block copolymers are commercially available. Illustrative commercially available block copolymers include the polystyrene-poly(ethylene-propylene) diblock copolymers available from Kraton Performance Polymers Inc. as KRATON^{™} G1701 (having 37 weight percent polystyrene) and G1702 (having 28 weight percent polystyrene); the polystyrene-poly(ethylene-butylene)-polystyrene triblock copolymers available from Kraton Performance Polymers Inc.as KRATON^{™} G1641 (having 33 weight percent polystyrene), G1650 (having 30 weight percent polystyrene), G1651 (having 33 weight percent polystyrene), and G1654 (having 31 weight percent polystyrene); and the polystyrene-poly(ethylene-ethylene/propylene)-polystyrene triblock copolymers available from Kuraray as SEPTON^{™} S4044, S4055, S4077, and S4099. Additional commercially available block copolymers include polystyrene-poly(ethylenebutylene)-polystyrene (SEBS) triblock copolymers available from Dynasol as CALPRENE^{™} H6140 (having 31 weight percent polystyrene), H6170 (having 33 weight percent polystyrene), H6171 (having 33 weight percent polystyrene), and H6174 (having 33 weight percent polystyrene); and from Kuraray as SEPTON^{™} 8006 (having 33 weight percent polystyrene) and 8007 (having 30 weight percent polystyrene); polystyrene-poly(ethylene-butylene-styrene)-polystyrene tapered block copolymers available from Kraton Performance Polymers as KRATON^{™} A1535 (having 56.3-60.3 weight percent polystyrene) and A1536 (having 37-44 weight percent polystyrene); polystyrene-poly(ethylene-propylene)-polystyrene (SEPS) copolymers available from Kuraray as SEPTON^{™} 2006 (having 35 weight percent polystyrene) and 2007 (having 30 weight percent polystyrene); oil-extended compounds of these block copolymers available from Kraton Performance Polymers Inc. as KRATON^{™} G4609 (containing 45% mineral oil, and the SEBS having 33 weight percent polystyrene) and G4610 (containing 31% mineral oil, and the SEBS having 33 weight percent polystyrene); and from Asahi as TUFTEC^{™} H1272 (containing 36% oil, and the SEBS having 35 weight percent polystyrene); polystyrene-polybutadiene-polystyrene (SBS) copolymer available from Kraton Performance Polymers as KRATON^{™} D1101 (having 29-33 weight percent polystyrene); and polystyrene-polybutadiene (SBS) copolymer available from Kraton Performance Polymers as KRATON^{™} D0243 (having 26-31 weight percent polystyrene). Mixtures of two of more block copolymers can be used.

The block copolymer is present in the composition in an amount of 0.1 to 15 weight percent, based on the total weight of the composition. Within this range, the block copolymer can be present in an amount of 1 to 15 weight percent, or 0.1 to 12 weight percent, or 0.1 to 11 weight percent, or 0.1 to 10 weight percent, or 1 to 12 weight percent, or 1 to 11 weight percent, or 0.1 to less than 11 weight percent, or 1 to less than 11 weight percent, or 1 to 10 weight percent, each based on the total weight of the composition.

In addition to the polyphenylene ether, the homopolystyrene, and the block copolymer, the composition further comprises a halogenated flame retardant. Exemplary halogenated flame retardants can include, for example, halogenated compounds and polymers of the formula 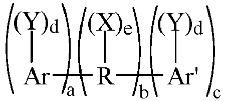 wherein R is an alkylene, alkylidene, or cycloaliphatic linkage (e.g., methylene, ethylene, propylene, isopropylene, isopropylidene, butylene, isobutylene, amylene, cyclohexylene, cyclopentylidene, and the like), a linkage selected from oxygen ether, carbonyl, amine, a sulfur containing linkage (e.g., sulfide, sulfoxide, or sulfone), a phosphorus containing linkage, and the like, or R can also consist of two or more alkylene or alkylidene linkages connected by such groups as aromatic, amino, ether, carbonyl, sulfide, sulfoxide, sulfone, a phosphorus containing linkage, and the like; Ar and Ar' can be the same or different and are mono- or polycarbocyclic aromatic groups such as phenylene, biphenylene, terphenylene, naphthylene, and the like; Y is an organic, inorganic or organometallic radical such as halogen (e.g., chlorine, bromine, iodine, or fluorine), ether group of the general formula OE wherein E is a monovalent hydrocarbon radical similar to X, monovalent hydrocarbon groups of the type represented by R, or other substituents (e.g., nitro, cyano, or the like), the substituents being essentially inert provided there be at least one and preferably two halogen atoms per aryl nucleus; each X is the same or different, and is a monovalent hydrocarbon group such as alkyl (e.g., methyl, ethyl, propyl, isopropyl, butyl, decyl, and the like, aryl ((e.g., phenyl, naphthyl, biphenyl, xylyl, tolyl, and the like), arylalkylene (e.g., as benzyl, ethylenephenyl, and the like), cycloaliphatic (e.g., cyclopentyl, cyclohexyl, and the like), as well as monovalent hydrocarbon groups containing inert substituents therein; the letter d represents a whole number from 1 to a maximum equivalent to the number of replaceable hydrogens substituted on the aromatic rings comprising Ar or Ar'; the letter e represents a whole number from 0 to a maximum equivalent to the number of replaceable hydrogens on R; the letters a, b, and c represent whole numbers including 0, provided that when b is not 0, neither a nor c can be 0, or that either a or c, but not both, can be 0, or that where b is 0, the aromatic groups are joined by a direct carbon-carbon bond; the hydroxyl and Y substituents on the aromatic groups, Ar and Ar' can be varied in the ortho, meta or para positions on the aromatic rings and the groups can be in any possible geometric relationship with respect to one another.

Included within the scope of the above formula are bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dibromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; and 2,2-bis-(3,5-dichloro-4-hydroxyphenyl)-propane 2,2 bis-(3-bromo-4-hydroxyphenyl)-propane. Also included within the above structural formula are: 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

Other brominated flame retardant compounds can include tetrabromobisphenol A polycarbonate oligomer, polybromophenyl ether, brominated polystyrene, brominated bisphenol A polyepoxide, brominated imides, brominated polycarbonate, poly (bromoaryl acrylate), poly (bromoaryl methacrylate), or mixtures thereof.

In an aspect, the halogenated flame retardant can comprise a halogenated polystyrene, for example a brominated polystyrene. Exemplary brominated polystyrene can include polydibromostyrene and polytribromostyrene. In an aspect, the brominated polystyrene can have an average degree of substation of 2 to 3 bromine atoms per styrene group, for example 2.1 to 2.9, or 2.5 to 2.9 bromine atoms per styrene group. In an aspect, the brominated polystyrene can have a bromine content of 50 to 75 weight percent, or 55 to 70 weight percent, or 60 to 70 weight percent, each based on the total weight of the brominated polystyrene and determined by elemental analysis.

The halogenated flame retardant can be present in the composition in an amount of 1 to 30 weight percent, based on the total weight of the composition. Within this range, the halogenated flame retardant can be present in an amount of 1 to 25 weight percent, or 1 to 20 weight percent, or 3 to 30 weight percent, or 3 to 18 weight percent, or 3 to 15 weight percent, or 4 to 20 weight percent, or 4 to 15 weight percent, each based on the total weight of the composition.

Metal synergists, e.g., antimony oxide, can also be used with the halogenated flame retardant. When present, the synergist can be present in an amount of 0.1 to 10 weight percent, based on the total weight of the composition. Within this range, when present, the synergist can be present in an amount of 0.1 to 5 weight percent, or 0.5 to 5 weight percent, or 1 to 5 weight percent, or 1 to 4 weight percent, each based on the total weight of the composition.

In an aspect, the composition can exclude flame retardants other than the halogenated flame retardant. For example, the composition can exclude a non-halogenated flame retardant. In an aspect, the composition can exclude a flame retardant comprising a non-halogenated organophosphate ester, a phosphinate (e.g., a metal dialkyl phosphinate), a phosphazene, a nitrogen-containing flame retardant, a metal hydroxide, or a combination thereof.

In a specific aspect, the composition can comprise 15 to 75 weight percent, or 35 to 45 weight percent of the polyphenylene ether; 15 to 45 weight percent, or 35 to 45 weight percent of the homopolystyrene, optionally in combination with the high impact polystyrene; 1 to 10 weight percent, or 2.5 to 7.5 weight percent of the block copolymer of an alkenyl aromatic and a conjugated diene; 3 to 20 weight percent, or 5 to 15 weight percent of the halogenated flame retardant; and 0.75 to 5 weight percent, or 1 to 3.5 weight percent of a flame retardant synergist. The polyphenylene ether can be a poly(2,6-dimethyl-1,4-phenylene ether) having an intrinsic viscosity of 0.1 to 1 deciliters per gram, or 0.1 to 0.8 deciliters per gram, as determined by Ubbelohde viscometer at 25°C in chloroform. The block copolymer can be an unhydrogenated block copolymer, preferably comprising a styrene-butadiene-styrene triblock copolymer. The halogenated flame retardant can comprise brominated polystyrene. The flame retardant synergist can comprise antimony trioxide.

The composition can optionally further comprise one or more additives, provided that the additive(s) do not significantly adversely affect a desired property of the foamed composition. The additive composition or individual additives can be mixed at a suitable time during the mixing of the components for forming the composition. The additive composition can include flow modifier, filler (e.g., a particulate polytetrafluoroethylene (PTFE), glass, carbon, mineral, or metal), acid scavenger, metal deactivator, antioxidant, heat stabilizer, light stabilizer, ultraviolet (UV) light stabilizer, UV absorbing additive, plasticizer, lubricant, nucleating agent, release agent (such as a mold release agent), antistatic agent, anti-fog agent, antimicrobial agent, colorant (e.g., a dye or pigment), surface effect additive, radiation stabilizer, anti-drip agent (e.g., a PTFE-encapsulated styrene-acrylonitrile copolymer (TSAN)), chain extender, compatibilizer, initiator, curing agent, crosslinker, or a combination thereof. The additives are used in amounts generally known to be effective. For example, the total amount of the additive composition (other than any impact modifier, filler, or reinforcing agent) can be 0.001 to 10 weight percent, or 0.1 to 10 weight percent, or 0.01 to 5 weight percent, each based on the total weight of the polymer in the composition. In an aspect the composition can exclude additives not specifically disclosed herein.

In an aspect, the composition can comprise an acid scavenger, a metal deactivator, a stabilizer, a mold release agent, an anti-drip agent, or a combination thereof.

Acid scavengers generally comprise carboxylate, carbonate, and bicarbonate salts of alkali metal and alkaline earth metals. The carboxylate salts have the general formula M(COOR¹)ₙ, wherein "M" is an alkali metal or an alkaline earth metal; R¹ is a monovalent C₁₋₆ alkyl group; and "n" is 1 or 2. Examples of alkali metal and alkaline earth metal carboxylates include, but are not limited to, lithium acetate, sodium acetate, potassium acetate, lithium benzoate, sodium benzoate, potassium benzoate, lithium propionate, sodium propionate, calcium acetate, calcium propionate, calcium benzoate, and the like. Examples of alkali metal and alkaline earth metal carbonates and bicarbonates include, but are not limited to, lithium carbonate, sodium carbonate, potassium carbonate, lithium bicarbonate, sodium bicarbonate, potassium bicarbonate, and the like. Any combination of the acid scavengers can also be used.

Heat stabilizer additives include organophosphites (e.g., triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or a combination thereof. The heat stabilizer can be tris(2,4-di-t-butylphenyl) phosphate available as IRGAPHOS 168. Heat stabilizers are generally used in amounts of 0.01 to 5 weight percent, based on the total weight of polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4-phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB 5411 from Cytec) or a combination thereof. The UV stabilizers can be present in an amount of 0.01 to 1 weight percent, preferably, 0.1 to 0.5 weight percent, and more preferably, 0.15 to 0.4 weight percent, based on the total weight of polymer in the composition.

There is considerable overlap among plasticizers, lubricants, and mold release agents, which include, for example, phthalic acid esters (e.g., octyl-4,5-epoxy-hexahydrophthalate), tris-(octoxycarbonylethyl)isocyanurate, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); fatty acid esters (e.g., C₁₋₃₂alkyl stearyl esters, such as methyl stearate and stearyl stearate and esters of stearic acid such as pentaerythritol tetrastearate, glycerol tristearate (GTS), and the like), waxes (e.g., beeswax, montan wax, paraffin wax, or the like), or a combination thereof. These are generally used in amounts of 0.01 to 5 weight percent, based on the total weight of the polymer in the composition.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. An TSAN comprises 50 weight percent PTFE and 50 weight percent SAN, based on the total weight of the encapsulated fluoropolymer. The SAN can comprise, for example, 75 weight percent styrene and 25 weight percent acrylonitrile based on the total weight of the copolymer. Anti-drip agents can be used in amounts of 0.1 to 10 weight percent, based on the total weight of the composition.

The relative amount of each component can be adjusted to provide the desired combination of properties guided by the present disclosure. As is understood by one of skill in the art, the amount of each component can be selected within the recited ranges such that they total 100 weight percent.

The composition can optionally exclude or minimize components not specifically described herein. In an aspect, the composition can exclude or minimize (e.g., include less than 5 weight percent, or less than 1 weight percent, or less than 0.1 weight percent) thermoplastic polymers other than the polyphenylene ether, the polystyrene, the block copolymer, and any polymeric flame retardant. In an aspect the composition can exclude or minimize a rubber-modified polystyrene or a high impact polystyrene. In an aspect, the composition can minimize (e.g., include less than 5 weight percent, or less than 1 weight percent, or less than 0.1 weight percent) or exclude a polyphenylene ether-siloxane block copolymer. In an aspect, the composition can minimize or exclude a coupling agent (e.g., a silane coupling agent, a titanate coupling agent, an aluminate coupling agent, or a combination thereof), a dispersant (e.g., a polyolefin-based hyperdispersant, a polyether-based hyperdispersant, a polyacrylate-based hyperdispersant, or a combination thereof) and deodorant (e.g., comprising hydrotalcite or silica), a nucleating agent (e.g., CaCO₃ (chalk), talc, carbon black, graphite, titanium dioxide, a polymeric nucleating agent, or a combination thereof), or a combination thereof.

The foamed composition (i.e., the composition after foaming with a blowing agent) is light weight and has a low density. The foamed composition, after foaming with a blowing agent, has a density of less than 0.5 grams per cubic centimeters (g/cm³). For example, the foamed composition can have a density of 0.05 to 0.4 g/cm³, or 0.05 to 0.3 g/cm³, or 0.05 to 0.25 g/cm³, or 0.1 to 0.4 g/cm³, or 0.1 to 0.3 g/cm³, or 0.1 to 0.25 g/cm³, or 0.12 to 0.4 g/cm³, or 0.12 to 0.3 g/cm³, or 0.12 to 0.28 g/cm³.

The foamed composition can also exhibit good flame retardant properties. For example, the foamed composition can exhibit a UL94 rating of V0 or V1 at a thickness of 5 millimeters.

The composition of the present disclosure can advantageously be made by an extrusion foaming process. Accordingly, a method of making a composition represents another aspect of the present disclosure.

The method comprises melt mixing in an extruder the polyphenylene ether, the homopolystyrene (optionally in combination with a high impact polystyrene), the block copolymer, and the halogenated flame retardant to provide a first mixture. The method further comprises introducing a blowing agent into the extruder (i.e., to contact the first mixture).

The term "blowing agent" is defined as a chemical agent that is used to foam a polymer. The blowing agent, also referred to herein as a foaming agent, can be a solid, a liquid, and/or a supercritical liquid. Suitable blowing agents that can be used include inorganic agents, organic agents and other chemical agents. Exemplary inorganic blowing agents include carbon dioxide, nitrogen, argon, water, air, nitrogen, and inert gases (such as helium and argon), as well as combinations comprising at least one of the foregoing. Exemplary organic agents include aliphatic hydrocarbons having 1-9 carbon atoms, aliphatic alcohols having 1-3 carbon atoms, and fully and partially halogenated aliphatic hydrocarbons having 1-4 carbon atoms. Aliphatic hydrocarbons include methane, ethane, propane, n-butane, isobutane, n-pentane, isopentane, neopentane, and the like. Aliphatic alcohols include methanol, ethanol, n-propanol, and isopropanol. Fully and partially halogenated aliphatic hydrocarbons include fluorocarbons, chlorocarbons, and chlorofluorocarbons. Examples of fluorocarbons include methyl fluoride, perfluoromethane, ethyl fluoride, 1,1-difluoroethane (HFC-152a), 1,1,1-trifluoroethane (HFC-143a), 1,1,1,2-tetrafluoro-ethane (HFC-134a), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane, and so forth. Partially halogenated chlorocarbons and chlorofluorocarbons include methyl chloride, methylene chloride, ethyl chloride, 1,1,1-trichloroethane, 1,1-dichloro-1-fluoroethane (HCFC-141b), 1-chloro-1,1-difluoroethane (HCFC-142b), chlorodifluoromethane (HCFC-22), 1,1-dichloro-2,2,2-trifluoroethane (HCFC-123), 1-chloro-1,2,2,2-tetrafluoroethane (HCFC-124), and the like. Fully halogenated chlorofluorocarbons include trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), trans-1-chloro-3,3,3-trifluoropropene (HFO-1233zd(E)), chloroheptafluoropropane, and dichlorohexafluoropropane. Other chemical agents include azodicarbonamide, azodiisobutyronitrile, benzenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, trihydrazino triazine, and so forth. In an aspect, the blowing agent can be carbon dioxide, air, nitrogen, argon, gaseous hydrocarbons, and combinations comprising at least one of the foregoing.

In an aspect, the blowing agent comprises carbon dioxide. The blowing agent can be solid carbon dioxide, liquid carbon dioxide, gaseous carbon dioxide, or supercritical carbon dioxide. Any of the inert gases, such as for example, helium, xenon, and argon can also be used. Non-limiting examples of gaseous hydrocarbons include methane, ethane, propane, and butane.

In an aspect, the blowing agent does not comprise citric acid, sodium bicarbonate, or a combination thereof.

An auxiliary blowing agent can optionally be used in combination with the blowing agent. Exemplary auxiliary blowing agents can include, for example, a fluorine-containing foaming agent (e.g., a fluorinated hydrocarbon). In an aspect, the auxiliary blowing agent can comprise conventional halogenated hydrocarbons, e.g., fluorocarbon blowing agents. The preferred hydrocarbon auxiliary blowing agents can include fluorocarbon blowing agents and include trichlorofluoromethane (CCl₃F), dichlorodifluoromethane (CCl₂F₂) and dichlorotetrafluoroethane (CClF₂CClF₂). These are commercially available as FREON 11, FREON 12 and FREON 114. Other halogenated hydrocarbon blowing agents can include methylene chloride, chloroform, carbon tetrachloride (CCl₄), HCFC's, such as difluorochloromethane (CHClF₂), (HCFC-22), (FORCMACEL S), dichlorotrifluoroethane (CHCl₂CF₃), (HCFC-123), dichlorotrifluoroethane (CHFClCClF₂), (HCFC-123A), chlorotetrafluoroethane (CHClFCF₃), (HCFC-124), tetrafluoroethane (CH₂FCF₃), (HFC-134A), dichlorofluoroethane (CCl₂FCH₃) , (HCFC-141B), chlorodifluoroethane (CH₃CClF₂), (HCFC-142B), difluoroethane (CH₃CHF₂), (HFC-152A), trans-1-chloro-3,3,3-trifluoropropene (HFO-1233zd(E)) and the like.

When an auxiliary blowing agent is present, it can be included at a weight ratio of blowing agent to auxiliary blowing agent of 1:0.1 to 1:0.5, or 1:0.1 to 1:0.3, or 1:0.2 to 1:0.3.

The blowing agent is mixed with the first mixture in the extruder to provide a second mixture. The method further comprises cooling the second mixture. In an aspect, cooling of the second mixture can be in a second extruder downstream of the first extruder. The second mixture is foamed through a die at the outlet of the extruder (or when present, the second extruder) to provide the foamed composition.

In an aspect, the temperature at the outlet of the extruder (or when present, the second extruder) is less than 200°C, or 130 to 200°C. The present inventors have found that such outlet temperatures can provide a desirable combination of properties for the foamed compositions according to the present disclosure.

The composition described herein can be useful in a variety of articles. An article comprising the foamed composition therefore represents another aspect of the present disclosure. Exemplary articles can include extruded foam sheets, foam insulation boards, building materials, an electric vehicle battery component, an electrical box component, an automotive component, or insulation for wire or cable.

This disclosure is further illustrated by the following examples, which are non-limiting.

### EXAMPLES

Materials used for the following examples are described in Table 1.

**Table 1**

| Component | Description | Product supplier |
|---|---|---|
| PPE | Poly(2,6-dimethyl-1,4-phenylene ether), CAS Reg. No. 25134-01-4, having an intrinsic viscosity of 0.46 deciliter/gram, determined at 25 °C in chloroform bv Ubbelohde viscometer | SABIC |
| GPPS | General purpose polystyrene, CAS Reg. No. 9003-53-6, MFR=2.8g/10min at 200°C and 5kg load | |
| HIPS | High impact polystyrene, CAS Reg. No. 9003-55-8, obtained as ET60 | Idemitsu |
| SBS | Linear triblock copolymer based on styrene and butadiene, having a polystyrene content of 31 wt%, CAS. Reg. No. 9003-55-8, obtained as D1101 | Kraton |
| Br-PS | Brominated polystyrene, CAS Reg. No. 88497-56-7, obtained as SAYTEX HP-7010G | Albemarle |
| SB₂O₃ | Antimony trioxide, CAS Reg. No. 1309-64-4 | |
| BPADP | Bisphenol A bis(diphenyl phosphate), CAS Reg. No. 181028-79-5, obtained as CR741 | Daihachi Chemical |
| DEPAL | Aluminium diethylphosphinate, CAS Reg. No. 225789-38-8, obtained as EXOLIT OP1230 | Clariant |
| CO₂ | Carbon dioxide | |
| LBA | Trans-1-chloro-3,3,3- trifluoropropene (HFO-1233zd(E)), obtained as SOLSTICE LBA | Honeywell |

Foamed samples were prepared according to the procedures described below.

### Example 1

The first twin-screw extruder had the barrel temperature, from the feeding port to the melt pump, set to 220°C, 230°C, 240°C, 260°C, 265°C, 260°C, 255°C, 255°C, 250°C, 245°C, respectively. The temperature of the melt pump was set to 250°C. The second extruder from the feeding port to the extrusion die was set to 250°C, 245°C, 240°C, 240°C, 235°C, 235°C and 230°C, respectively.

The components were fed into the feeding port of the first extruder, and the materials were compounded in a twin-screw extruder, via melt pump and the single screw extruder, extruded from the die.

Foaming agent supercritical CO₂ at a 4 milliliter per minute (ml/min) feeding speed was injected into the first extruder by syringe pump. The melt pump and the second extruder gradually cooled down, until the end temperature of single extruder was reduced to 180°C. The foamed polyphenylene ether sheet was produced from the die. The foamed sheet was cut into the testing samples for density and flame testing.

### Example 2

The first twin-screw extruder had a barrel temperature, from the feeding port to the melt pump, set to 220°C, 230°C, 240°C, 260°C, 260°C, 260°C, 255°C, 255°C, 250°C, 245°C, respectively. The temperature of the melt pump was set to 250°C. The second extruder from the feeding port to the extrusion die was set to 250°C, 245°C, 240°C, 240°C, 235°C, 235°C and 230°C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 4 ml/min feeding speed by syringe pump. The melt pump and the second extruder gradually cooled down, until the end temperature of single extruder was reduced to 180°C. The foamed polyphenylene ether sheet was produced from the die. The foamed sheet was cut into the testing samples for density and flame testing.

### Example 3

The first twin-screw extruder had a barrel temperature, from the feeding port to the melt pump, set to 220°C, 230°C, 240°C, 260°C, 260°C, 260°C, 255°C, 255°C, 250°C, 245°C, respectively. The temperature of the melt pump was set to 250 °C. The second extruder from the feeding port to the extrusion die was set to 250°C, 245°C, 240°C, 240°C, 235°C, 235°C and 230°C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 4 ml/min feeding speed by syringe pump. The melt pump and the second extruder gradually cooled down, until the end temperature of single extruder was reduced to 180°C. The foamed polyphenylene ether sheet was produced from the die. The foamed sheet was cut into the testing samples for density and flame testing.

### Example 4

The first twin-screw extruder had a barrel temperature, from the feeding port to the melt pump, set to 220°C, 230°C, 240°C, 260°C, 260°C, 260°C, 255°C, 255°C, 250°C, 245°C, respectively. The temperature of the melt pump was set to 250°C. The second extruder from the feeding port to the extrusion die was set to 250°C, 245°C, 240°C, 240°C, 235°C, 235°C and 230°C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 4 ml/min feeding speed by syringe pump. The melt pump and the second extruder gradually cooled down, until the end temperature of single extruder was reduced to 178°C. The foamed polyphenylene ether sheet was produced from the die. The foamed sheet was cut into the testing samples for density and flame testing.

### Example 5

The first twin-screw extruder had a barrel temperature, from the feeding port to the melt pump, set to 220°C, 230°C, 240°C, 260°C, 260°C, 260°C, 255°C, 255°C, 250°C, 245°C, respectively. The temperature of the melt pump was set to 240°C. The second extruder from the feeding port to the extrusion die was set to 240°C, 235°C, 235°C, 235°C, 230°C, 230°C and 225°C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 5.6 ml/min feeding speed by syringe pump. The melt pump and the second extruder gradually cooled down, until the end temperature of single extruder was reduced to 135°C. The foamed polyphenylene ether sheet was produced from the die. The foamed sheet was cut into the testing samples for density and flame testing.

### Example 6

The first twin-screw extruder had a barrel temperature, from the feeding port to the melt pump, set to 230°C, 240°C, 250°C, 265°C, 265°C, 265°C, 255°C, 255°C, 250°C, 250°C, respectively. The temperature of the melt pump was set to 250°C. The second extruder from the feeding port to the extrusion die was set to 250°C, 245°C, 245°C, 245°C, 245°C, 240°C and 240°C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 3.7 ml/min feeding speed by syringe pump. The melt pump and the second extruder gradually cooled down, until the end temperature of single extruder was reduced to 196°C. The foamed polyphenylene ether sheet was produced from the die. The foamed sheet was cut into the testing samples for density and flame testing.

### Example 7

The first twin-screw extruder had a barrel temperature, from the feeding port to the melt pump, set to 220°C, 230°C, 240°C, 260°C, 265°C, 260°C, 255°C, 255°C, 250°C, 245°C, respectively. The temperature of the melt pump was set to 250°C. The second extruder from the feeding port to the extrusion die was set to 250°C, 245°C, 240°C, 240°C, 235°C, 235°C and 230°C, respectively.

The components were fed into the feeding port of the first extruder, and the materials were compounded in a twin-screw extruder, via melt pump and the single screw extruder, extruded from the die.

Foaming agents supercritical CO₂ and LBA in a 4:1 ratio and a 4 ml/min feeding speed, were injected into the first extruder by syringe pump. The melt pump and the second extruder gradually cooled down, until the end temperature of single extruder was reduced to 173°C. The foamed polyphenylene ether sheet was produced from the die. The foamed sheet was cut into the testing samples for density and flame testing.

### Example 8

The first twin-screw extruder had a barrel temperature, from the feeding port to the melt pump, set to 220°C, 230°C, 240°C, 260°C, 265°C, 260°C, 255°C, 255°C, 250°C, 245°C, respectively. The temperature of the melt pump was set to 250°C. The second extruder from the feeding port to the extrusion die was set to 250°C, 245°C, 240°C, 240°C, 235°C, 235°C and 230°C, respectively.

The components were fed into the feeding port of the first extruder, and the materials were compounded in a twin-screw extruder, via melt pump and the single screw extruder, extruded from the die.

Foaming agents supercritical CO₂ and LBA in a 4:1 ratio and a 4 ml/min feeding speed, were injected into the first extruder by syringe pump. The melt pump and the second extruder gradually cooled down, until the end temperature of single extruder was reduced to 170°C. The foamed polyphenylene ether sheet was produced from the die. The foamed sheet was cut into the testing samples for density and flame testing.

### Comparative Example 1

The first twin-screw extruder had a barrel temperature, from the feeding port to the melt pump, set to 230°C, 240°C, 250°C, 265°C, 265°C, 260°C, 255°C, 255°C, 250°C, 245°C, respectively. The temperature of the melt pump was set to 250°C. The second extruder from the feeding port to the extrusion die was set to 250°C, 245°C, 240°C, 245°C, 240°C, 240°C and 235°C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 3.7 ml/min feeding speed by syringe pump. The melt pump and the second extruder gradually cooled down, until the end temperature of single extruder was reduced to 205°C. The foamed polyphenylene ether sheet was produced from the die.

### Comparative Example 2

The first twin-screw extruder had a barrel temperature, from the feeding port to the melt pump, set to 220°C, 225°C, 230°C, 240°C, 255°C, 250°C, 250°C, 250°C, 240°C, 240°C, respectively. The temperature of the melt pump was set to 250°C. The second extruder from the feeding port to the extrusion die was set to 230°C, 225°C, 225°C, 220°C, 215°C, 215°C and 210°C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 5.6 ml/min feeding speed by syringe pump. The melt pump and the second extruder gradually cooled down, until the end temperature of single extruder was reduced to 110°C. The foamed polyphenylene ether sheet was produced from the die. The foamed sheet was cut into the testing samples for density and flame testing.

### Comparative Example 3

The first twin-screw extruder had a barrel temperature, from the feeding port to the melt pump, set to 220°C, 230°C, 240°C, 260°C, 265°C, 260°C, 255°C, 255°C, 250°C, 245°C, respectively. The temperature of the melt pump was set to 250°C. The second extruder from the feeding port to the extrusion die was set to 250°C, 245°C, 240°C, 240°C, 235°C, 235°C and 230°C, respectively.

The components were fed into the feeding port of the first extruder, and the materials were compounded in a twin-screw extruder, via melt pump and the single screw extruder, extruded from the die.

Foaming agents supercritical CO₂ and LBA in a 4:1 ratio and a 7.5 ml/min feeding speed, were injected into the first extruder by syringe pump. The melt pump and the second extruder gradually cooled down, until the end temperature of single extruder was reduced to 162°C. The foamed polyphenylene ether sheet was produced from the die. The foamed sheet was cut into the testing samples for density and flame testing.

Compositions and processing parameters for each example are summarized in Table 2. The amount of each component is provided in weight percent (wt%) based on the total weight of the composition.

Table 2 also shows the results of performance testing for each example. Density was measured according to ISO 1183 and is reported in units of g/cm³. Flame testing was conducted on 125x13x5 mm test bars according to UL 94 testing standards.

**Table 2**

| Composition | Units | CE1 | CE2 | CE3 | E1 | E2 | E3 | E4 | E5 | E6 | E7 | E8 |
|---|---|---|---|---|---|---|---|---|---|---|---|---|
| PPE | wt% | 87.5 | 100 | 40.1 | 39.7 | 41.7 | 39.8 | 38.0 | 20.0 | 70.0 | 39.7 | 39.7 |
| GPPS | wt% | 7.0 | 86.5 | 41.8 | 41.0 | 42.0 | 40.1 | 38.2 | 65.0 | 20.0 | 41.0 | 36.0 |
| HIPS | wt% | | | | | | | | | | | 5 |
| SBS | wt% | 2.0 | | 1.7 | 8.0 | 5.0 | 5.0 | 5.0 | 2.5 | 2.5 | 8.0 | 8.0 |
| Br-PS | wt% | 2.0 | 2.0 | | 8.0 | 8.0 | 11.0 | 14.0 | 9.0 | 5.0 | 8.0 | 8.0 |
| SB₂O₃ | wt% | 0.5 | 0.5 | | 1.7 | 1.7 | 2.3 | 3.0 | 1.9 | 1.1 | 1.7 | 1.7 |
| BPADP | wt% | | | 4 | | | | | | | | |
| DEPAL | wt% | | | 11.8 | | | | | | | | |
| Additives¹ | wt% | 1.0 | 1.0 | 0.6 | 1.6 | 1.6 | 1.8 | 1.8 | 1.6 | 1.4 | 1.6 | 1.6 |
| Processing Conditions | | | | | | | | | | | | |
| Foaming agent ratio | CO₂/LBA | 5:0 | 5:0 | 4:1 | 5:0 | 5:0 | 5:0 | 5:0 | 5:0 | 5:0 | 4:1 | 4:1 |
| Temperature at the end of the second extruder | °C | 205 | 110 | 162 | 180 | 180 | 180 | 178 | 135 | 196 | 173 | 170 |
| Material feeding rate | kg/h | 14 | 18 | 25 | 15 | 15 | 15 | 15 | 18 | 14 | 15 | 15 |
| Foaming agent feeding rate | mL/min | 3.7 | 5.6 | 7.5 | 4 | 4 | 4 | 4 | 5.6 | 3.7 | 4 | 4 |
| Properties | | | | | | | | | | | | |
| Density | g/cm³ | 1.01 | 0.09 | 0.91 | 0.20 | 0.18 | 0.18 | 0.17 | 0.10 | 0.26 | 0.14 | 0.15 |
| UL 94 rating (5mm) | | NA | No rating | NA | V1 | V0 | V0 | V0 | V1 | V1 | V1 | V1 |
| Foamed | | No | Yes | No | Yes | Yes | Yes | Yes | Yes | Yes | Yes | Yes |

| | | | | | | | | | | | | |
|---|---|---|---|---|---|---|---|---|---|---|---|---|
| ¹ One or more of acid scavengers, metal deactivators, stabilizers, nucleating agents, mold release agents, anti-drip agent | | | | | | | | | | | | |

As shown in Table 2, particular compositions according to the present disclosure could desirably provide polyphenylene ether foams by extrusion. The foamed materials were of low density (e.g., 0.26 g/cm³ or less), and further achieved V0 or V1 flame retardance ratings according to UL 94. In contrast, compositions according to the comparative examples could not be foamed. Rather, a higher density material (e.g., 1.01 g/cm³) was obtained for Comparative Example 1. Comparative Example 2 did not include SBS and included a high amount of GPPS and a low amount of PPE and could not reach V1 or V0 flame retardance ratings. Comparative Example 3 included non-halogenated flame retardants and could not be foamed. Table 2 also shows that the temperature at the end of the second extruder can impact foam formation. For example, if the temperature at the outlet of the second extruder is not suitable then the resulting foam may not be desirable. The present inventors have found that a temperature at the end of the second extruder being 130 to 200°C can be advantageous in providing the desired foamed materials.

Accordingly, the Comparative Examples and the Examples according to the present disclosure show that particular compositions and processing conditions are needed to provide the desired low density foamed compositions having the particular combination of low density and flame retardance using a halogenated flame retardant. A significant improvement is therefore provided by the present disclosure.

This disclosure further encompasses the following aspects, which are non-limiting.

Aspect 1: A composition comprising: 12 to 85 weight percent of a polyphenylene ether; 12 to 85 weight percent of a homopolystyrene, optionally in combination with a high impact polystyrene; 0.1 to 15 weight percent of a block copolymer of an alkenyl aromatic and a conjugated diene; and 1 to 30 weight percent of a halogenated flame retardant; wherein weight percent of each component is based on the total weight of the composition; and wherein the composition, after foaming with a blowing agent, has a density of less than 0.5 g/cm³.

Aspect 2: The composition of aspect 1, wherein the composition is made by a method comprising: melt mixing in an extruder the polyphenylene ether, the homopolystyrene or the combination of the homopolystyrene and the high impact polystyrene, the block copolymer, and the halogenated flame retardant to provide a first mixture; introducing a blowing agent into the extruder; mixing the blowing agent and the first mixture in the extruder to provide a second mixture; cooling the second mixture, optionally in a second extruder; and foaming the second mixture through a die to provide the composition having a density of less than 0.5 g/cm³.

Aspect 3: The composition of aspect 2, wherein the blowing agent is a physical blowing agent, preferably comprising carbon dioxide optionally in combination with an auxiliary foaming agent, preferably wherein the auxiliary foaming agent comprises a fluorine-containing foaming agent.

Aspect 4: The composition of any of aspects 1 to 3, wherein the polyphenylene ether is a poly(2,6-dimethyl-1,4-phenylene ether), preferably wherein the phenylene ether has an intrinsic viscosity of 0.1 to 1 deciliters per gram, or 0.1 to 0.8 deciliters per gram, as determined by Ubbelohde viscometer at 25°C in chloroform.

Aspect 5: The composition of any of aspects 1 to 4, wherein the block copolymer is an unhydrogenated block copolymer, preferably comprising a styrene-butadiene-styrene triblock copolymer.

Aspect 6: The composition of any of aspects 1 to 5, wherein the halogenated flame retardant comprises a halogenated polystyrene, preferably wherein the composition comprises 3 to 30 weight percent, or 4 to 20 weight percent, or 4 to 15 weight percent of a brominated polystyrene, each based on the total weight of the composition.

Aspect 7: The composition of any of aspects 1 to 6, wherein the composition further comprises a flame retardant synergist, preferably 0.1 to 10 weight percent of the flame retardant synergist, based on the total weight of the composition.

Aspect 8: The composition of aspect 7, wherein the flame retardant synergist comprises antimony trioxide.

Aspect 9: The composition of any of aspects 1 to 8, wherein the composition, after foaming with a blowing agent, has one or both of: a density of 0.05 to 0.4 g/cm³, or 0.05 to 0.3 g/cm³; or a UL94 rating of V0 or V1 at a thickness of 5 millimeters.

Aspect 10: The composition of any of aspects 1 to 9, further comprising an additive composition, preferably wherein the additive composition comprises an acid scavenger, a metal deactivator, a stabilizer, a mold release agent, an anti-drip agent, a nucleating agent, a compatibilizer, a chain extender, a lubricant, or a combination thereof.

Aspect 11: The composition of aspect 1, comprising: 15 to 75 weight percent, or 35 to 45 weight percent of the polyphenylene ether; 15 to 45 weight percent, or 35 to 45 weight percent of the homopolystyrene, optionally in combination with the high impact polystyrene; 1 to 10 weight percent, or 2.5 to 7.5 weight percent of the block copolymer of an alkenyl aromatic and a conjugated diene; 3 to 20 weight percent, or 5 to 15 weight percent of the halogenated flame retardant; and 0.75 to 5 weight percent, or 1 to 3.5 weight percent of a flame retardant synergist; preferably, wherein the polyphenylene ether is a poly(2,6-dimethyl-1,4-phenylene ether) having an intrinsic viscosity of 0.1 to 1 deciliters per gram, or 0.1 to 0.8 deciliters per gram, as determined by Ubbelohde viscometer at 25°C in chloroform; the block copolymer is an unhydrogenated block copolymer, preferably comprising a styrene-butadiene-styrene triblock copolymer; the halogenated flame retardant comprising brominated polystyrene; and the flame retardant synergist comprises antimony trioxide.

Aspect 12: A method of making a composition, the method comprising: melt mixing in an extruder 12 to 85 weight percent of a polyphenylene ether; 12 to 85 weight percent of a homopolystyrene, optionally in combination with a high impact polystyrene; 0.1 to 15 weight percent of a block copolymer of an alkenyl aromatic and a conjugated diene; and 1 to 30 weight percent of a flame retardant; to provide a first mixture, wherein weight percent of each component is based on the total weight of the first mixture; introducing a blowing agent into the extruder; mixing the blowing agent and the first mixture in the extruder to provide a second mixture; cooling the second mixture, optionally in a second extruder; and foaming the second mixture through a die to provide the composition having a density of less than 0.5 g/cm³.

Aspect 13: The method of aspect 12, wherein the blowing agent is a physical blowing agent, preferably comprising carbon dioxide or comprising carbon dioxide in combination with an auxiliary foaming agent wherein the auxiliary foaming agent comprises a fluorine-containing foaming agent.

Aspect 14: The method of aspect 12 or 13, wherein a temperature at the end of the second extruder, is less than 200°C, or 130 to less than 200°C.

Aspect 15: An article comprising the composition of any of aspects 1 to 11.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein, and may or may not be present in other aspects. The term "combination thereof' as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example - CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A composition comprising:
12 to 85 weight percent of a polyphenylene ether;
12 to 85 weight percent of a homopolystyrene, optionally in combination with a high impact polystyrene;
0.1 to 15 weight percent of a block copolymer of an alkenyl aromatic and a conjugated diene; and
1 to 30 weight percent of a halogenated flame retardant;
wherein weight percent of each component is based on the total weight of the composition; and
wherein the composition, after foaming with a blowing agent, has a density of less than 0.5 g/cm³.

2. The composition of claim 1, wherein the composition is made by a method comprising:
melt mixing in an extruder the polyphenylene ether, the homopolystyrene or the combination of the homopolystyrene and the high impact polystyrene, the block copolymer, and the halogenated flame retardant to provide a first mixture;
introducing a blowing agent into the extruder;
mixing the blowing agent and the first mixture in the extruder to provide a second mixture;
cooling the second mixture, optionally in a second extruder; and
foaming the second mixture through a die to provide the composition having a density of less than 0.5 g/cm³.

3. The composition of claim 2, wherein the blowing agent is a physical blowing agent, preferably comprising carbon dioxide optionally in combination with an auxiliary foaming agent, preferably wherein the auxiliary foaming agent comprises a fluorine-containing foaming agent.

4. The composition of any of claims 1 to 3, wherein the polyphenylene ether is a poly(2,6-dimethyl-1,4-phenylene ether), preferably wherein the phenylene ether has an intrinsic viscosity of 0.1 to 1 deciliters per gram, or 0.1 to 0.8 deciliters per gram, as determined by Ubbelohde viscometer at 25°C in chloroform.

5. The composition of any of claims 1 to 4, wherein the block copolymer is an unhydrogenated block copolymer, preferably comprising a styrene-butadiene-styrene triblock copolymer.

6. The composition of any of claims 1 to 5, wherein the halogenated flame retardant comprises a halogenated polystyrene, preferably wherein the composition comprises 3 to 30 weight percent, or 4 to 20 weight percent, or 4 to 15 weight percent of a brominated polystyrene, each based on the total weight of the composition.

7. The composition of any of claims 1 to 6, wherein the composition further comprises a flame retardant synergist, preferably 0.1 to 10 weight percent of the flame retardant synergist, based on the total weight of the composition.

8. The composition of claim 7, wherein the flame retardant synergist comprises antimony trioxide.

9. The composition of any of claims 1 to 8, wherein the composition, after foaming with a blowing agent, has one or both of:
a density of 0.05 to 0.4 g/cm³, or 0.05 to 0.3 g/cm³; or
a UL94 rating of V0 or V1 at a thickness of 5 millimeters.

10. The composition of any of claims 1 to 9, further comprising an additive composition, preferably wherein the additive composition comprises an acid scavenger, a metal deactivator, a stabilizer, a mold release agent, an anti-drip agent, a nucleating agent, a compatibilizer, a chain extender, a lubricant, or a combination thereof.

11. The composition of claim 1, comprising:
15 to 75 weight percent, or 35 to 45 weight percent of the polyphenylene ether;
15 to 45 weight percent, or 35 to 45 weight percent of the homopolystyrene, optionally in combination with the high impact polystyrene;
1 to 10 weight percent, or 2.5 to 7.5 weight percent of the block copolymer of an alkenyl aromatic and a conjugated diene;
3 to 20 weight percent, or 5 to 15 weight percent of the halogenated flame retardant; and
0.75 to 5 weight percent, or 1 to 3.5 weight percent of a flame retardant synergist; preferably, wherein
the polyphenylene ether is a poly(2,6-dimethyl-1,4-phenylene ether) having an intrinsic viscosity of 0.1 to 1 deciliters per gram, or 0.1 to 0.8 deciliters per gram, as determined by Ubbelohde viscometer at 25°C in chloroform;
the block copolymer is an unhydrogenated block copolymer, preferably comprising a styrene-butadiene-styrene triblock copolymer;
the halogenated flame retardant comprising brominated polystyrene; and
the flame retardant synergist comprises antimony trioxide.

12. A method of making a composition, the method comprising:
melt mixing in an extruder
12 to 85 weight percent of a polyphenylene ether;
12 to 85 weight percent of a homopolystyrene, optionally in combination with a high impact polystyrene;
0.1 to 15 weight percent of a block copolymer of an alkenyl aromatic and a conjugated diene; and
1 to 30 weight percent of a flame retardant;
to provide a first mixture, wherein weight percent of each component is based on the total weight of the first mixture;
introducing a blowing agent into the extruder;
mixing the blowing agent and the first mixture in the extruder to provide a second mixture;
cooling the second mixture, optionally in a second extruder; and
foaming the second mixture through a die to provide the composition having a density of less than 0.5 g/cm³.

13. The method of claim 12, wherein the blowing agent is a physical blowing agent, preferably comprising carbon dioxide or comprising carbon dioxide in combination with an auxiliary foaming agent wherein the auxiliary foaming agent comprises a fluorine-containing foaming agent.

14. The method of claim 12 or 13, wherein a temperature at the end of the second extruder, is less than 200°C, or 130 to less than 200°C.

15. An article comprising the composition of any of claims 1 to 11.
